(19) Europäisches Patentamt

European Patent Office

Office européen des brevets

(11) Veröffentlichungsnummer: **0 310 869**
**A2**

## (12) EUROPÄISCHE PATENTANMELDUNG

(21) Anmeldenummer: **88115523.8**

(22) Anmeldetag: **22.09.88**

(51) Int. Cl.⁴: **G01S 13/86 , G01S 7/06**

(30) Priorität: **08.10.87 DE 3733962**

(43) Veröffentlichungstag der Anmeldung:
**12.04.89 Patentblatt 89/15**

(84) Benannte Vertragsstaaten:
**BE CH DE FR GB IT LI NL SE**

(71) Anmelder: **Wegmann & Co. GmbH**
**August-Bode-Strasse 1**
**D-3500 Kassel(DE)**

(72) Erfinder: **Wambach, Heio**
**Schinkgasse 2**
**D-3501 Grifte(DE)**
Erfinder: **Gerlach, Uwe, Dr.**
**Heckerstrasse 14**
**D-3500 Kassel(DE)**

(74) Vertreter: **Feder, Wolf-Dietrich et al**
**Dr. Wolf-D. Feder, Dr. Heinz Feder Dipl.-Ing.**
**P.-C. Sroka Dominikanerstrasse 37**
**D-4000 Düsseldorf 11(DE)**

(54) **Verfahren zur automatischen Zielklassifizierung durch Land-und Wasserkampffahrzeuge sowie Einrichtung zur Durchführung des Verfahrens.**

㊼ Ein Verfahren zur automatischen Zielklassifizierung durch Land- und Wasserkampffahrzeuge sowie eine Einrichtung zur Durchführung des Verfahrens. Von einem vom Radargerät erfaßten Objekt werden zwei Meßgrößen automatisch aufgenommen, nämlich Entfernung und Annäherungsgeschwindigkeit und daraus die Annäherungszeiten berechnet. Die beiden Objekte mit der kleinsten Annäherungszeit werden ausgewählt und es werden in einer Vorauswertung einem Objekt Bekämpfungsmaßnahmen und dem anderen Objekt Selbstschutz-maßnahmen zugeordnet. Die Objekte werden auf dem Radarbildschirm markiert. Es werden dann von jedem ausgewählten Objekt Entfernung, Höhe, Geschwindigkeit und Radarrückstrahlintensität aufgenommen. Die Annäherungszeit und die Art des Objektes werden bestimmt und mit vorgegebenen Vergleichswerten verglichen. Wenn die Auswertung dieser Meßgrößen ergibt, daß Selbstschutzmaßnahmen noch sinnvoll sind, werden diese ausgelöst. Wenn die Auswertung ergibt, daß Selbstschutzmaßnahmen nicht mehr sinnvoll sind, werden von dem nunmehr vom optronischen Sensor erfaßten Objekt Entfernung, Höhe, Geschwindigkeit und eine optische oder thermische Erkennungsgröße aufgenommen und mit Vergleichswerten verglichen und die Art sowie die Lage- und Bewegungsdaten des Objektes angezeigt.

EP 0 310 869 A2

Die Erfindung betrifft ein Verfahren zur automatischen Zielklassifizierung durch Land- und Wasserkampffahrzeuge, die mit Radargeräten für Rundsuchradar und Zielfolgeradar, einem optronischen Sensor sowie Selbstschutzgeräten ausgerüstet sind und eine Einrichtung zur Durchführung dieses Verfahrens an einem Kampffahrzeug, das mit einem optronischen Sensor (Periskop, TV-Tagsichtgerät, Laser-Entfernungsmesser und Wärmebildgerät) sowie Rundsuchradar und Zielfolgeradar ausgerüstet ist.

In der modernen Kampftechnik sind Kampffahrzeuge, beispielsweise Panzerkampfwagen, aber auch beispielsweise Kriegsschiffe, einer erhöhten Bedrohung durch Lenkflugkörper ausgesetzt. Es ist bekannt, gegen derartige Bedrohungen Selbstschutzmaßnahmen, wie Nebelwände, im visuellen und Infrarot-Bereich einzusetzen. Weitere Maßnahmen sind das Ausbringen von Scheinzielen gegen infrarotgesteuerte Flugkörper oder Radardüppelwolken zur Desorientierung von Millimeterwellenradar-Zielsuchköpfen in endphasengelenkten Flugkörpern.

Um derartige Selbstschutzmaßnahmen mit Erfolg einsetzen zu können, müssen folgende Randbedingungen beachtet werden:

1. die maximale Entdeckungsreichweite von Flugkörpern, z.B. durch das Rundsuchradar, beträgt beispielsweise ca. 7 km.

2. die maximale Flugkörpergeschwindigkeit beträgt z.Z. ca. 500 m/s;

3. die minimale Zeit von der Entdeckung des Flugkörpers bis zum Stehen von Nebelwänden beträgt, z.B. für einen Flak-Panzer, 8 - 10 s.

Aus diesen Randbedingungen ergibt sich ein Zeitraum von nur 4 s, innerhalb dessen eine Nebelausbringung überhaupt sinnvoll ist.

In der oben angegebenen Zeit von 8 - 10 s bis zum Stehen von Nebelwänden sind die Reaktionszeiten der Besatzung und Zeiten für Abwehrmaßnahmen des Kampffahrzeuges enthalten. Dies bedeutet, daß die Gesamtreaktionszeit erheblich verkürzt werden könnte, wenn die Erkennung und Klassifizierung des Ziels automatisiert und damit dem Einfluß der Besatzung entzogen wird.

Die der Erfindung zugrunde liegende Aufgabe bestand darin, ein Verfahren der eingangs erwähnten Art so auszubilden, daß sowohl die Zielklassifizierung als auch die Auslösung von Selbstschutzmaßnahmen automatisch unabhängig von Eingriffen der Besatzung erfolgt und somit die Zeit bis zum Wirksamwerden des Selbstschutzes erheblich verkürzt wird. Weiterhin sollte das Verfahren in der Lage sein zu erkennen, ob Selbstschutzmaßnahmen noch sinnvoll sind oder eine direkte Bekämpfung des Zieles aufgenommen werden muß.

Die Lösung dieser Aufgabe erfolgt erfindungsgemäß mit den Merkmalen aus dem kennzeichnenden Teil des Patentanspruchs 1. Vorteilhafte Weiterbildungen des erfindungsgemäßen Verfahrens sind in den Ansprüchen 2 bis 6 beschrieben.

Eine Einrichtung zur Durchführung des erfindungsgemäßen Verfahrens ist Gegenstand des Anspruchs 7.

Die Erfindung macht Gebrauch von Einrichtungsteilen, die im wesentlichen zur Normalausrüstung eines modernen Kampffahrzeuges gehören, wie beispielweise dem Rundsuchradar und dem Zielfolgeradar, einem optronischen Sensor, bestehend aus Periskop, TV-Tagsichtgerät, Laser-Entfernungsmesser und Wärmebildgerät. Die elektronische Vorauswerteschaltung sowie die elektronische Auswerteschaltung zur Auswertung der Ergebnisse enthalten jeweils einen Prozessor und Speichervorrichtungen. Es kann hier im Prinzip ein Rechner mitbenutzt werden, der ebenfalls in vielen modernen Kampffahrzeugen bereits zur üblichen Ausrüstung gehört, beispielsweise in der Form des Feuerleitrechners. Es wird aber darauf hingewiesen, daß die Erfindung nicht ausschließlich unter Einsatz eines Digitalrechners ausführbar ist, sondern daß auch Analogrechner mit fest verdrahteten Schaltungen eingesetzt werden können, bei denen die für das erfindungsgemäße Verfahren notwendige Systemzeitkonstante und die Vergleichswerte der Meßgrößen in bekannter Weise als Schwellwerte eingegeben bzw. eingestellt werden.

Wie weiter unten anhand eines Ausführungsbeispiels näher erläutert, ist das erfindungsgemäße Verfahren sehr gut an bestimmte technische Gegebenheiten anpaßbar, wie beispielsweise die Entwicklung neuer Ausrüstungsteile an Kampffahrzeugen und die Entwicklung neuer Flugkörper und neuer Lenksysteme für Flugkörper.

Die Durchführung des erfindungsgemäßen Verfahrens erfolgt in mehreren Stufen. Da sich im Bereich des Rundsuchradars jeweils eine ganze Reihe potentieller Angreifer befinden können, werden zunächst die Annäherungszeiten aller erfaßten Objekte aufgrund der durch Such-Radar erfaßten Entfernungen und Annäherungsgeschwindigkeiten berechnet und es wird in einer elektronischen Vorauswertung eine Sortierung der Angreifer und eine hierarchische Stufung der Gegenmaßnahmen festgelegt (Verfahrensschritte a bis c). Dabei dienen als Parameter die Entfernung und die Annäherungsgeschwindigkeitsvektoren der Objekte, wobei diese Geschwindigkeitskomponente aus dem radialen Suchradar-Dopplersignal ermittelt wird. Die Größen werden in Bezug gesetzt zur Reichweite der Hauptwaffe des Kampffahrzeugs. Befinden sich feindliche Objekte an der Grenze der Hauptwaffen-Reichweite, so setzt die automatische Vorauswertung ein, in der schließlich jeweils die beiden gefährlichsten Objekte auf dem Radarbildschirm, beispielsweise durch auffälliges Blinken, markiert werden.

Es hat sich als sinnvoll erwiesen, der vorrangigen halbautomatischen Selbstschutz-Ausbringung einen fixierten Zeitraum zuzuordnen, der, wie weiter unten näher erläutert wird, durch zwei vorgegebene Zeitwerte tA und tB gekennzeichnet ist, wobei der erste Zeitwert tA der oberen Zeitgrenze zur automatischen Nebelauslösung und der zweite minimale Zeitwert tB der unteren Zeitgrenze zur automatischen Nebelauslösung entspricht. Bei Annäherungszeiten, die größer sind als der erste Zeitwert, hat der Kommandant genug Zeit selbst zu entscheiden, bei Annäherungszeiten, die kleiner sind als der zweite minimale Zeitwert, muß das Objekt direkt bekämpft werden.

Wenn die Sortierung der Angreifer abgeschlossen ist, setzt die zweite Stufe des erfindungsgemäßen Verfahrens ein (s. Verfahrensschritte d, d1 und d2). Es werden nunmehr von den beiden in der Vorauswertung ausgewählten Objekten vier Meßgrößen, nämlich Entfernung, Höhe, Annäherungsgeschwindigkeit und Radarrückstrahlintensität aufgenommen. Dabei können die Meßgrößen des Objektes, dem in der Vorauswertung Bekämpfungsmaßnahmen zugeordnet wurden, über das Zielfolgeradar ermittelt werden, während die Meßgrößen des Objektes, dem in der Vorauswertung Selbstschutzmaßnahmen zugeordnet wurden, über den optronischen Sensor (Rückstrahlintensität durch thermische Intensität ersetzt) ermittelt werden können.

Wenn sich zeigt, daß die Auslösung von Selbstschutzmaßnahmen aufgrund der Ergebnisse dieser Verfahrensschritte möglich ist, weil die ermittelte Annäherungszeit noch größer ist als die Systemzeitkonstante, d.h. der minimale Zeitraum, innerhalb dessen eine Nebelausbringung noch sinnvoll ist, werden diese Selbstschutzmaßnahmen ausgelöst und das Verfahren wird mit dem Schritt d1) beendet. Das Verfahren ist ebenfalls beendet, wenn sich zeigt, daß es sich bei dem erkannten Objekt nicht um ein feindliches Objekt handelt (IFF-Abfrage). In diesem Fall werden keine Selbstschutzmaßnahmen ausgelöst. Wenn die Auswertung ergibt, daß der Einsatz von Selbstschutzmaßnahmen nicht mehr sinnvoll ist, beispielsweise weil das feindliche Objekt schon zu nahe ist, werden die im Patentanspruch 1 unter d2) angegebenen Verfahrensschritte ausgeführt und die Besatzung des Kampffahrzeuges erhält die zur Bekämpfung des Objektes notwendigen Daten angezeigt.

Im Prinzip ist es auch möglich, bestimmte Bekämpfungsmaßnahmen nach Durchführung der Verfahrensschritte unter d2) automatisch einzuleiten.

Im folgenden wird anhand der beigefügten Zeichnungen das erfindungsgemäße Verfahren und ein Beispiel für eine Einrichtung zu seiner Durchführung näher erläutert.

In den Zeichnungen zeigen:

Fig. 1 in einem Blockschaltbild eine Einrichtung zur Durchführung eines Verfahrens zur automatischen Zielklassifizierung in einem Kampffahrzeug, beispielsweise einem Flugzeugabwehr-Panzer;

Fig. 2 in einem Blockschaubild die Struktur der Einzelaufgaben der Auswerte- und Entscheidungsschaltung aus Fig. 1;

Fig. 3 in einer graphischen Darstellung die Einteilung der zu klassifizierenden Ziele bei einer bestimmten Ausführungsform des Verfahrens nach vorgegebenen Kategorien.

Fig. 4 in einem Blockschaubild die Struktur der Einzelaufgaben der Schaltung zur Vorauswertung aus Fig. 1;

Fig. 5 in einem Zeitdiagramm eine bildliche Darstellung des Algorithmus für die Sortierung der Angreifer in einer Prioritätslogik.

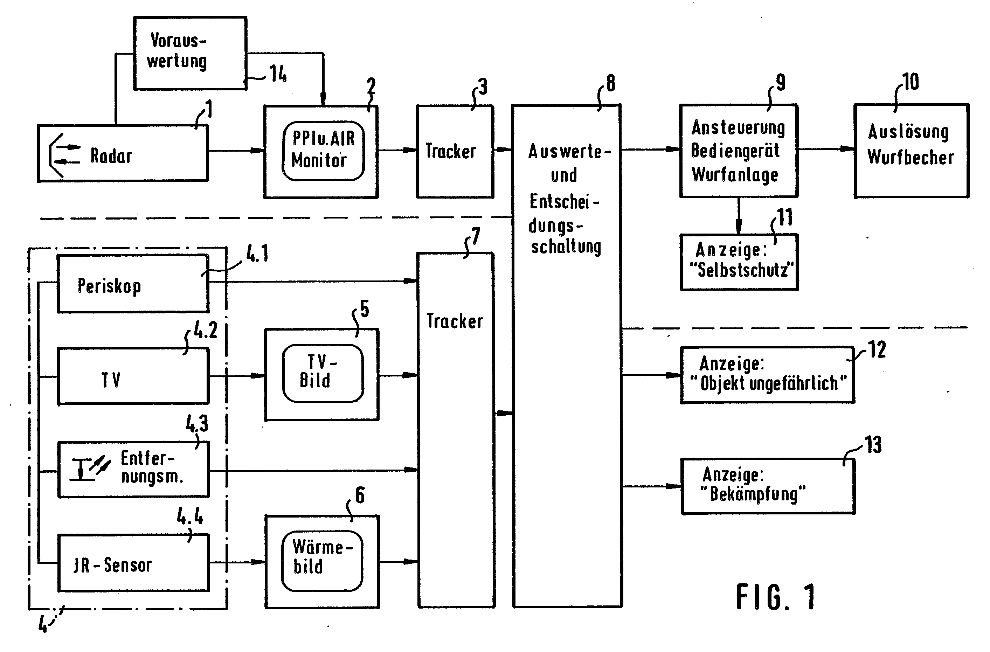

Fig. 1 zeigt die gesamte Vernetzung der für ein Verfahren zur automatischen Zielklassifizierung benötigten Baugruppe, z.B. in einem Flugzeugabwehr-Panzer, der Radargeräte 1 und einen optronischen Sensor 4, bestehend aus Periskop 4.1, TV-Tagsichtgerät 4.2, Laser-Entfernungsmesser 4.3 und Wärmebildgerät 4.4 mitsamt den Tracker-Baugruppen 3 und 7 und Monitoren 2, 5 und 6 für die Radar-Anzeige, das TV-Bild und das Wärmebild, zur Verfügung hat.

Die Tracker-Baugruppen 3 und 7 übernehmen dabei in bekannter Weise das Aufschalten des Radar-Gerätes 1 bzw. des optronischen Sensors 4 auf das bedrohende Objekt und dessen Verfolgung.

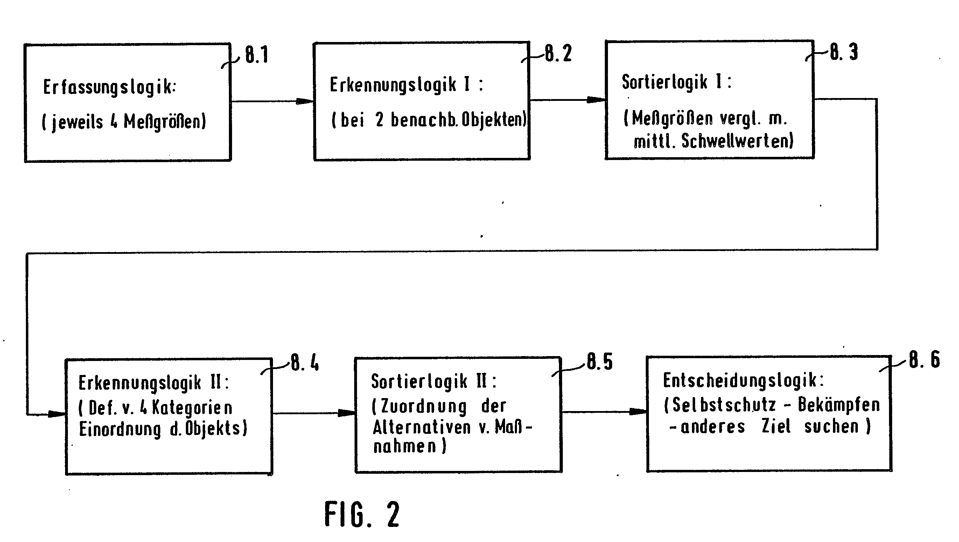

Die für das durchzuführende Verfahren neu benötigten Baugruppen sind eine Auswerte- und Entscheidungsschaltung 8, deren Funktion weiter unten anhand von Fig. 2 näher erläutert wird, sowie Steuerschaltungen 9 und 10 zur Vorbereitung und Auslösung von Selbstschutzmaßnahmen durch Positionierung und Auslösung einer Nebelkörper-Wurfanlage. Die automatische Ansteuerung 9 für das Ausbringen der Nebel-Wurfkörper ist dabei über ein vorhandenes Bediengerät zur manuellen Auslösung der Wurfkörper zu führen. Weiterhin sind Anzeigegeräte 11, 12 und 13 vorhanden, welche die Entscheidung der Auswerte- und Entscheidungsschaltung 8 für eine Selbstschutzalternative, für direktes Bekämpfen oder für eine dritte Maßnahme der Besatzung optisch und/oder akustisch anzeigen.

Die in Fig. 1 gestrichelt eingezeichnete Trennlinie soll andeuten, daß gegen die wesentliche Bedrohung durch schnelle Lenkflugkörper eine erfolgreiche Vernebelung nur bei frühzeitiger Aufklärung durch Radar mit ausreichendem Auflösungsvermögen möglich ist. Innerhalb der geringeren Entdeckungsreichweite des optronischen Sensors 4 ist zumeist nur die direkte Bekämpfung sinnvoll.

Die Schaltung 14 zur Vorauswertung sowie die Auswerte-und Entscheidungsschaltung 8 können z.B. in den Feuerleitrechner des Kampfpanzers integriert sein. Dieser enthält entsprechende Speichervorrichtungen zur Eingabe vorgegebener Werte für die Entfernung, die Höhe, die Annäherungs-Geschwindigkeit und die Radarrückstrahlintensität einer Anzahl vorgegebener Objekte und weiterhin zur Eingabe von optischen Erkennungsgrößen, beispielsweise die die Objektgröße kennzeichnenden sogenannten Pixelzahlen und von thermischen Erkennungsgrößen, beispielsweise die Abgastemperaturen von Raketentriebwerken oder Strahltriebwerken bestimmter Flugkörper bzw. Flugzeuge. Weiterhin sind die üblichen Ein-Ausgabeeinheiten sowie Schaltungen zur Umwandlung der von den Sensoren abgegebenen Signale in die vom Rechner zu verarbeitenden Signale vorhanden, die in ihrem Grundaufbau bekannt sind und nicht näher dargestellt werden.

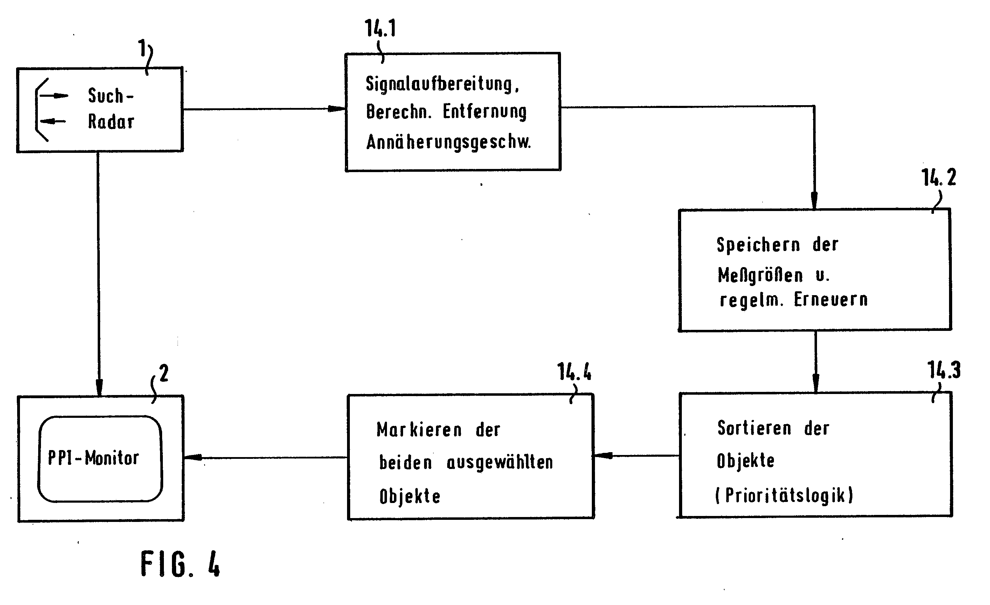

Die Struktur der Schaltung 14 zur Vorauswertung ist in Fig. 4 dargestellt. Sie arbeitet mit einem Programm, aufgrund dessen das vom Suchradar 1 ausgehende Rohvideosignal sowie der Sendertakt und die Winkelstellung einer Signalaufbereitung 14.1 zugeführt werden, in der ein Vermessen und Berechnen aller Objekte nach Entfernung und Annäherungsgeschwindigkeit durchgeführt wird. In der nächsten Stufe 14.2 werden die Meßgrößen gespeichert und nach Veränderungen regelmäßig erneuert. In der weiteren Stufe 14.3 erfolgt das Sortieren der Objekte mit einer Prioritätslogik. Dabei wird festgelegt, daß in einem verbleibenden Reaktionszeitraum zwischen den Zeiten tA und tB gelangende Objekte wegen der halbautomatischen Selbstschutzauslösung besonders sortiert werden. Die zwei Objekte mit den kürzesten Annäherungszeiten werden ausgewählt und über die Schaltung 14.4 auf dem PPI-Monitor 2 mit einer Markierung, beispielsweise durch Blinken, gekennzeichnet. Hierbei kann das Objekt mit der kürzesten Annäherungszeit durch schnelles Blinken gekennzeichnet sein und es werden ihm Bekämpfungsmaßnahmen zugeordnet, während das Objekt mit der zweitkürzesten Annäherungszeit durch langsameres Blinken gekennzeichnet ist und ihm Selbstschutzmaßnahmen zugeordnet werden.

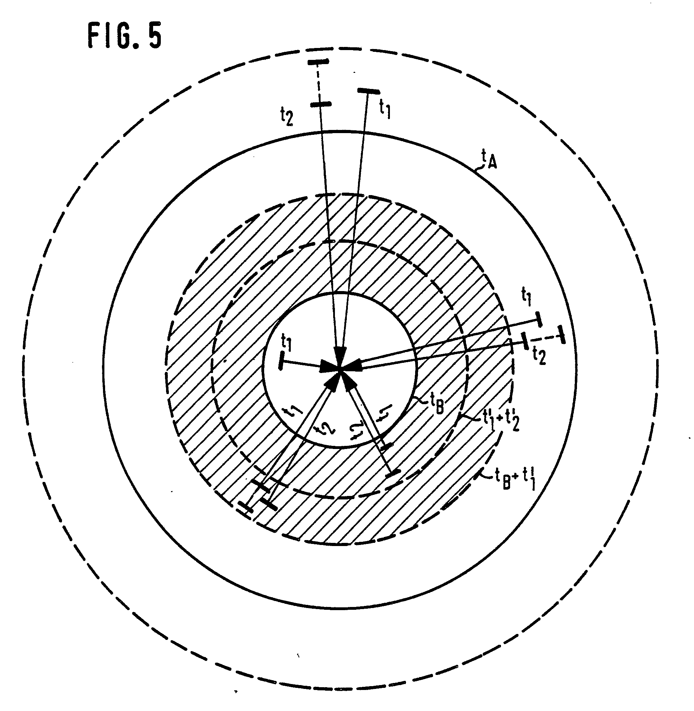

Die Sortierung der Angreifer übernimmt ein im folgenden anhand von Fig. 5 zu beschreibender Algorithmus. Fig. 5 zeigt in einem dem Suchradar-Monitor nachgebildeten Zeitdiagramm wie eine Vielzahl von Angreifern zeitlich geordnet werden kann und welche Gegenmaßnahmen in jedem Einzelfall sinnvoll sind.

In Fig. 5 bedeuten:

tA und tB die obere bzw. untere Zeitgrenze zur automatischen Nebelauslösung. Dies sind einzuspeichernde Festwerte, beispielsweise tA = 10 sec. und tB = 5 sec.

t1 ist jeweils der verbleibende Zeitraum, bis der Feind 1 den Panzer trifft. Diese Annäherungszeit wird berechnet aus Entfernung und Annäherungsgeschwindigkeit des feindlichen Objekts. Die Annäherungsgeschwindigkeit berechnet sich aus dem radialen Suchradar-Dopplersignal, die Entfernung liefert die Entfernungstorbank.

t2 ist der verbleibende Zeitraum, bis der Feind 2 den Panzer trifft. Die Annäherungszeit wird wie bei t1 berechnet.

$t1'$ ist die Restzeit bis zur Schußfreigabe zur Bekämpfung des feindlichen Objektes mit der kürzeren Annäherungszeit (berechnet aus Turmdrehung, Waffenvorhalt, ballistischen Daten usw.).

$t2'$ ist die Restzeit bis zur Nebel-Wurfbecher-Auslösung gegen das feindliche Objekt mit der längeren Annäherungszeit (berechnet im wesentlichen aus der Turmdrehung, wobei die Nebelwand-Mitte parallel zur Hauptwaffenrichtung liegt).

Die beiden kürzesten Annäherungszeiten werden einem Algorithmus zugeführt, der aus folgenden Ungleichungen besteht:

$$\left.\begin{array}{l} t1 > t2 > tA \\ t2 > t1 > tA \end{array}\right\} \longrightarrow \text{erst Nebel, dann Bekämpfen (zu entscheiden von Kdt bzw. RS)}$$

4

$$tA > t1 > t2 > tB + t1' \rightarrow \text{Nebel automat., Bekämpfen}$$
$$tA > t2 > t1 > tB + t1' \rightarrow \text{Nebel automat., Bekämpfen}$$
$$tA > t1 > t2 > t1' + t2' \rightarrow \text{Nebel automat., Bekämpfen}$$

$$tA > t2 > t1 > tB \longrightarrow \begin{cases} \text{a)} \quad \text{wenn } t1 > t1' + t2' \\ \qquad\text{Nebel automat., Bek.} \\[1em] \text{b)} \quad \text{wenn } t1 < t1' + t2' \\ \qquad\text{nur Bekämpfen} \end{cases}$$

$t1 < tB \rightarrow$ nur Bekämpfen

Wenn auf dem Rundsuchradar-Monitor mehr als zwei Bedrohungen entdeckt werden, werden von allen als feindlich identifizierten Objekten Entfernung und Annäherungsgeschwindigkeit vermessen und die daraus berechneten Annäherungszeiten nach der Größe geordnet und abgespeichert. Die zwei Objekte mit der kürzesten Annäherungszeit werden ausgewählt und dem Algrorithmus, wie oben beschrieben, unterworfen.

Sobald der beschriebene Algorithmus ermittelt hat, welches Objekt bekämpft und gegen welches Selbstschutz ausgelöst werden soll, wird die Zielverfolgung (Folgeradar- und optronischer Tracker) aufgeschaltet und auf beide Objekte automatisch der zweite Teil des Verfahrens zur Ziel klassifizierung angewendet, bei dem die Auswerte- und Entscheidungsschaltung 8 eingesetzt wird. Wenn das Objekt für Selbstschutzmaßnahmen auf dem Monitor des optronischen Sensors noch nicht erkennbar ist (kleinere Reichweite als beim Radar), kann der Kommandant für eine Standard-Selbstschutzmaßnahme entscheiden (z.B. Nah- und Fernsicherung und Düppelwolke ausbringen, Radarsender nicht abschalten).

Die Struktur der Auswerte- und Entscheidungsschaltung 8 ist in Fig. 2 dargestellt. Sie arbeitet mit einem Programm, aufgrund dessen die vom Radargerät 1 und dem Sensor 4 gelieferten Meßwerte ausgewertet und mit den eingespeicherten Werten verglichen werden.

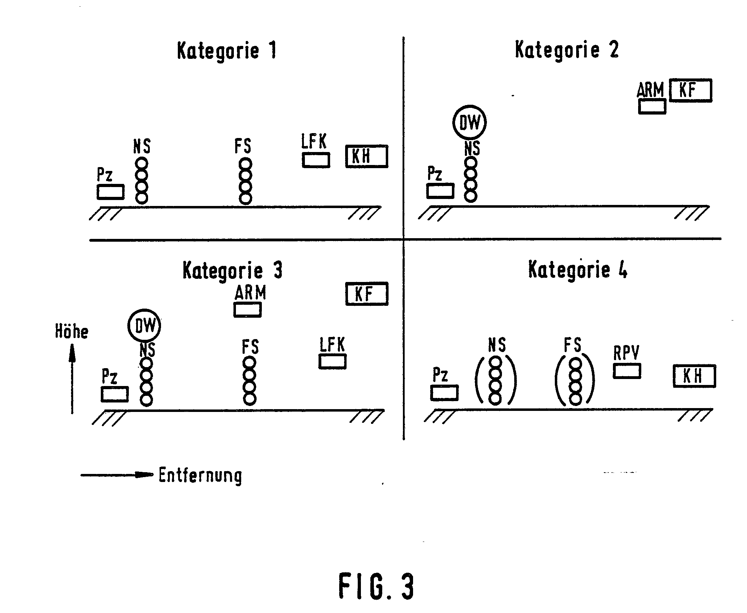

Es hat sich für die abzuleitenden Selbstschutz- bzw. Bekämpfungsmaßnahmen als zweckmäßig erweisen, die in die Speichervorrichtung einzugebenden Vergleichswerte für die zu verarbeitenden Meßgrößen so auszuwählen, daß die verschiedenartigen Bedrohungen durch Lenkflugkörper in vier Kategorien eingeteilt werden, die charakteristische Unterscheidungsmerkmale aufweisen und deshalb eine Zielklassifizierung durch Mustererkennung erlauben. Diese Kategorien sind in Fig. 3 näher dargestellt, in der folgende Bezeichnungen verwendet werden:

Pz = Panzer
NS = Nahsicherung, FS = Fernsicherung
DW = Düppelwolke
LFK = Panzerabwehr-Lenkflugkörper
KH = Kampfhubschrauber
ARM = Anti-Radar- und andere Flugkörper
KF = Kampfflugzeug
RPV = Aufklärungs- oder Kampfdrohen.

Wie aus Fig. 3 abzulesen, verteilen sich die verschiedenen Objekte in folgender Weise auf die Kategorien:

Kategorie 1:

Kampfhubschrauber KH, die Panzerabwehr-Lenkflugkörper LFK abfeuern, stellen eine wesentliche Bedrohung dar. Es können durch die Zielerkennungsgeräte des Panzers zwei sich trennende Objekte registriert werden, nämlich der langsam und niedrig fliegende Kampfhubschrauber und der auf hohe Geschwindigkeit beschleunigte und sich schnell dem Kampfpanzer nähernde Lenkflugkörper. Waffenträger und Flugkörper sind nach ihrer Signalgröße bzw. -intensität unterscheidbar. Letzteres gilt ebenso für die folgenden Kategorien.

Kategorie 2:

Schnell- und hochfliegende Kampfflugzeuge KF können leitstrahlgelenkte, autonom endphasengelenkte (Infrarot bzw. Millimeterwellen-Radar-Suchkopf) und Anti-Radar-Flugkörper ARM abfeuern. Eine Flugkörpertyp-Unterscheidung ist vom Panzer aus gesehen nicht möglich. Es werden zwei, etwa gleichschnelle, sich trennende, hochfliegende Objekte registriert. Der Flugkörper nähert sich schneller dem Panzer als das Kampfflugzeug KF.

Kategorie 3:

Niedrig- bzw. hochfliegende schnelle Lenkflugkörper LFK bzw. Anti-Radar- und andere Flugkörper ARM oder schnelle Kampfflugzeuge KF nähern sich einzeln dem Kampfpanzer.

Kategorie 4:

Niedrigfliegende langsame Kampfhubschrauber KH oder Aufklärungs- bzw. Kampfdrohnen RPV nähern sich als Einzelobjekt dem Kampfpanzer. Falls die Drohnen zu langsam fliegen, werden sie von Radargeräten nicht registriert. Die Hubschrauber sind wegen der sich schnell drehenden Rotorblätter im Radar erkennbar.

Die oben angegebenen Zielklassifizierungen können zum Zwecke des Selbstschutzes durch Nebel eingesetzt werden. Das Verfahren läuft dann folgendermaßen ab:

Der Panzerrichtschütze bzw. der Kommandant entdeckt ein drohendes Objekt auf dem Bildschirm 2 des Rundsuchradars und schaltet nach Feinderkennung das Zielfolgeradar auf dieses Objekt.

Das Zielfolgeradar ermittelt die Entfernung, die Höhe und die Geschwindigkeit des bzw. der Objekte und registriert die Radarrückstrahlintensität. Diese vier Meßgrößen werden an die Steuer- und Auswerteschaltung 8 weitergegeben und sind ausreichend, um mittels des vorgegebenen Programms eine Zielklassifizierung und eine eindeutige Zuordnung der Objekte zu einer der vier obengenannten Kategorien aufgrund der eingespeicherten Grenz- und Vergleichswerte vorzunehmen. Die Entfernungs-, Höhen- und Geschwindigkeitsmessung liefert zwei Entscheidungskriterien:

a) zum einen, ob das Objekt noch weit genug éntfernt ist, um die Auslösung von Selbstschutzmaßnahmen sinnvoll erscheinen zu lassen;

b) zum anderen wird bei zwei Objekten deren Entfernungsänderung in Bezug auf den Panzer vermessen und nur das Objekt mit der größeren Annäherungsgeschwindigkeit wird weiterverfolgt.

Wie aus Fig. 2 abzulesen, werden in der Auswerte- und Entscheidungsschaltung 8 die Meßgrößen zunächst einer Erfassungslogik 8.1 zugeführt, in der eine Aufnahme und Verarbeitung der Sensor-Meßwerte nach den vier Grundgrößen: Entfernung, Höhe, Annäherungsgeschwindigkeit und Rückstrahlintensität bzw. Objektgröße bzw. Abgastemperatur stattfindet. An die Erfassungslogik 8.1 schließt sich eine erste Erkennungslogik 8.2 an, in der bei zwei benachbarten Objekten das Objekt mit der höheren Annäherungsgeschwindigkeit ermittelt und als bedrohendes Objekt in der folgenden Verarbeitung weiterverfolgt wird. Auf die erste Erkennungslogik folgt eine erste Sortierlogik 8.3, in der die Meßwerte durch Vergleich mit mittleren Schwellwerten sortiert und nach "niedrig" bzw. "hoch" eingestuft werden. In der sich dann anschließenden zweiten Erkennungslogik 8.4 erfolgt die Definition der oben beschriebenen vier Kategorien (s. Fig. 3) und die Einordnung des bedrohenden Objektes in eine dieser Kategorien. Schließlich erfolgt in der sich anschließenden zweiten Sortierlogik 8.5 die Zuordnung der Selbstschutzalternativen bzw. der Bekämpfungsmaßnahmen gemäß Einsatztaktik zu dem erkannten Objekt und in der Entscheidungslogik 8.6 erfolgt die Entscheidung für "Selbstschutz" oder "direktes Bekämpfen" oder "anderes Ziel suchen" je nachdem, ob der eingegebene minimale Zeitwert tB, also die Systemzeitkonstante über- oder unterschritten ist, oder das Objekt ungefährlich ist.

Wenn die Anwendung dieses zweiten Algorithmus ergibt, daß gegen eines der zwei Objekte keine Gegenmaßnahme erforderlich ist, so wird sofort wiederum der erste Algorithmus aktiviert, um die Gegenmaßnahme, die noch nicht gestartet wurde, gegen ein drittes feindliches Objekt einzuleiten. Der automatische Ablauf der Algo rithmen bleibt solange aktiv, bis Bekämpfung mindestens einmal und Selbstschutz einmal abgelaufen sind. Bekämpfung kann mehrmals stattfinden, wenn noch keine Vernebelung erfolgt ist.

Das Ergebnis der Auswertung führt zur Auswahl bestimmter Alternativen der Selbstschutzmaßnahmen und zu deren Auslösung. Bei der Ausbringung von Nebelwänden ist in dem Beispiel nach Fig. 3 zwischen Nahsicherung NS und Fernsicherung FS unterschieden, wobei sich die entsprechenden Nebelwände in verschiedenen vorgegebenen Entfernungen vom Kampfpanzer befinden. Die Maßnahmen werden nach einer Panzer-Turmdrehung in Bedrohungsrichtung durch Ansteuerung entsprechender Selbstschutzgeräte vollautomatisch ausgelöst.

Falls Kategorie 1 zutrifft, wird Nahsicherung NS und Fernsicherung FS ausgelöst. Die verschiedenartigen Lenkflugkörper nach Kategorie 2 sind nicht unterscheidbar. Deswegen werden in jedem Fall Nahsicherung NS ausgelöst und gleichzeitig die Radarsender abgeschaltet und eine Düppelwolke DW ausgebracht.

Bei Objekten der Kategorie 3 werden nur bei schwacher Radarrückstrahlintensität Selbstschutzmaßnahmen aktiviert. Tieffliegenden Objekten wird Nahsicherung NS und Fernsicherung FS entgegengesetzt, bei hochfliegenden Objekten werden gleichzeitig die Radarsender abgeschaltet und die Düppelwolke DW ausgebracht.

Falls in Kategorie 4 Signale registriert werden, kann Nahsicherung NS oder Fernsicherung FS ausgelöst werden (in Fig. 3 deshalb in Klammern dargestellt), oder aber der Kommandant entscheidet, ob andere akutere Bedrohungen vorliegen. Zu diesem Zweck werden die Auswerteergebnisse über die Anzeigevorrichtungen 11-13 der Besatzung mitgeteilt.

Wenn die Entfernungs- und Geschwindigkeitsmessungen aufgrund der vom Radargerät 1 gelieferten Meßgrößen ergibt, daß die verbleibende Zeit zur Durchführung von Selbstschutzmaßnahmen durch Nebel nicht mehr ausreicht, muß das Objekt direkt bekämpft werden. Auch in dieser Gefechtssituation ist die automatische Klassifizierung sinnvoll, um die gefährlichen von den weniger gefährlichen Objekten zu unterscheiden und dem Kommandanten schnell wertvolle Entscheidungshilfen anzubieten.

Wenn sich die feindlichen Objekte innerhalb der Reichweite des optronischen Sensors 4 befinden, übernimmt dieser die Aufklärung und Zielverfolgung.

Während der Zielverfolgung läuft das Verfahren der Klassifizierung nach demselben Schema wie oben beschrieben ab. Da die Meßgröße "Radarrückstrahlintensität" hier nicht verwendet werden kann, wird mit optischen oder thermischen Erkennungsgrößen gearbeitet. Zu diesem Zweck wird beispielsweise im Bild des TV-Tagsichtgerätes 4.2, das auf dem zugehörigen Monitor 5 erscheint, die Größe des auf dem Bildschirm erscheinenden Objektes unterschieden. Eine Pixelzahl als Schwellenwert diskriminiert zwischen kleinen Lenkflugkörpern bzw. Drohnen und größeren Hubschraubern bzw. Flugzeugen.

Beim Wärmebildgerät 4.4-6 ist eine Unterscheidung nach Objektgröße nicht zweifelsfrei möglich. Hier bietet sich an, die Abgastemperatur der unterschiedlichen Antriebe von Flugkörpern und Flugzeugen als thermische Erkennungsgröße zu sensieren. Bei Raketentriebwerken werden Abgastemperaturen von $2000\,^\circ C$ und mehr gemessen, bei Strahltriebwerken jedoch nur Temperaturen kleiner $1000\,^\circ C$. Eine Sensierung dieser Unterschiede ist eindeutig möglich im nahen Infrarot-Bereich (ca. $1 \mu m$) unter Verwendung von Si- bzw. PbS-Detektoren. Eine gleichzeitige automatische Aufnahme der Szene mit den Cd Hg Te-Detektoren des Wärmebildgerätes 5 im 8-14 $\mu m$-Bereich und mit Si- oder PbS-Detektoren ist hier vorteilhaft durchführbar.

Die Ergebnisse dieses Teils des Verfahrens werden der Besatzung über die Anzeigevorrichtung 13 mitgeteilt.

Die Nutzung der automatischen Objektunterscheidung für die direkte Bekämpfung bleibt der Einsatztaktik des Kommandanten vorbehalten.

In einem praktischen Zahlenbeispiel kann sich die Durchführung des beschriebenen Verfahrens etwa folgendermaßen darstellen:

Auf dem Monitor 2 entdeckt der Richtschütze zwei Bildpunkte dicht beieinander. Die IFF-Abfrage liefert "Feind-Identifizierung".

Nun übernimmt der Tracker das Doppelziel und veranlaßt folgende Messungen:

1. Entfernung:     6 km
2. Höhe      100m
3. Geschwindigkeit in Bezug auf Sichtlinie

200 km/h für Objekt 1

800 km/h für Objekt 2

4. Die Rückstrahlintensität von Objekt 1 ist stark, von Objekt 2 schwach.

Die automatische Entscheidungsfindung für eine geeignete Abwehrmaßnahme wird aus den vier Meßgrößen nach dem beschriebenen Verfahren berechnet. Diese Berechnung liefert: Selbstschutzmaßnahme NS (Nah- und Fernsicherung) auslösen, gemäß Kategorie 1 in Fig. 3.

**Ansprüche**

1. Verfahren zur automatischen Zielklassifizierung durch Land- und Wasserkampffahrzeuge, die mit Radargeräten für Rundsuchradar und Zielfolgeradar, einem optronischen Sensor sowie Selbstschutzgeräten ausgerüstet sind, gekennzeichnet durch folgende Verfahrensschritte:

a) Von jedem vom Rundsuchradar erfaßten Objekt werden fortlaufend zunächst zwei Meßgrößen automatisch aufgenommen und gespeichert, nämlich Entfernung und Annäherungsgeschwindigkeit und aus diesen Meßgrößen die Annäherungszeit des jeweiligen Objekts berechnet;

b) die beiden Objekte mit der kleinsten Annäherungszeit werden automatisch ausgewählt, überwacht und das Bild dieser beiden Objekte auf dem Radarbildschirm wird mit einem Markierungssignal gekennzeichnet, sobald ihre Annäherungszeit einen vorgegebenen ersten Zeitwert (tA) unterschreitet;

c) es wird in einer elektronischen Vorauswertung festgestellt, welchem dieser beiden Objekte Bekämpfungsmaßnahmen und welchem Selbstschutzmaßnahmen zugeordnet werden und dies durch unterschiedliche Markierung auf dem Radarbildschirm angezeigt;

d) es werden dann von jedem der beiden Objekte mit der kleinsten Annäherungszeit nach Aufschalten des Folgeradar-Trackers vier Meßgrößen automatisch über das Radargerät aufgenommen und gespeichert, nämlich Entfernung, Höhe, Annäherungsgeschwindigkeit und Radarrückstrahlintensität und aus diesen Meßgrößen die Annäherungszeit der Objekte berechnet und mit einem eine Systemzeitkonstante darstellenden zweiten minimalen Zeitwert (tB) in einer elektronischen Auswertung verglichen und es wird aufgrund der elektronischen Auswertung automatisch entschieden, ob folgende Maßnahmen ergriffen werden:

d1) Wenn der gemessene Wert für die Annäherungszeit größer ist als die Systemzeitkonstante und weitere Vergleichswerte ein vorgegebenes Objekt erkennen lassen, werden an die Meßergebnisse angepaßt, automatisch vorgegebene Selbstschutzmaßnahmen ausgelöst;

d2) wenn der gemessene Wert für die Annäherungszeit gleich der oder kleiner als die Systemzeitkonstante ist und weitere Vergleichswerte ein vorgegebenes Objekt erkennen lassen, werden Maßnahmen zur Bekämpfung des Objekts eingeleitet, wobei von dem vom optronischen Sensor erfaßten Objekt vier Meßgrößen automatisch aufgenommen und gespeichert werden, nämlich Entfernung, Höhe, Annäherungsgeschwindigkeit und eine optischen oder thermische Erkennungsgröße und jeweils mit vorgegebenen Vergleichswerten in einer elektronischen Auswertung verglichen und aufgrund der elektronischen Auswertung Art sowie Lage und Bewegungsdaten des Objekts angezeigt werden.

2. Verfahren nach Anspruch 1, dadurch gekennzeichnet daß die vier Meßgrößen des Objekts dem in der Vorauswertung Bekämpfungsmaßnahmen zugeordnet wurden, über das Zielfolgeradar ermittelt werden, während die vier Meßgrößen des Objekts dem in der Vorauswertung Selbstschutzmaßnahmen zugeordnet wurden, über den optronischen Sensor ermittelt werden.

3. Verfahren nach Anspruch 1 oder 2, dadurch gekennzeichnet, daß das vom Radargerät erfaßte Objekt automatisch nach Ermittlung der vier Meßgrößen in vorgegebene Kategorien eingeordnet wird und die Art der ausgelösten Selbstschutzmaßnahmen aufgrund der ermittelten Kategorie bestimmt wird.

4. Verfahren nach einem der Ansprüche 1 bis 3, dadurch gekennzeichnet, daß das vom optronischen Sensor erfaßte Objekt automatisch nach Ermittlung der vier Meßgrößen in vorgegebene Kategorien eingeordnet und dies angezeigt wird.

5. Verfahren nach einem der Ansprüche 1 bis 4, dadurch gekennzeichnet, daß zur Erzeugung der vierten Meßgröße des optronischen Sensors als optische Erkennungsgröße das in dem TV-Tagsichtgerät erzeugte visuelle Objekt-Bild auf einem Bildschirm wiedergegeben wird, wobei die Pixelzahl des Objektes mit einem Vergleichswert in einer elektronischen Auswertung verglichen und eine entsprechende Anzeige abgegeben wird.

6. Verfahren nach einem der Ansprüche 1 bis 4, dadurch gekennzeichnet, daß zur Erzeugung der vierten Meßgröße des optronischen Sensors das von einem Wärmebildgerät als thermische Erkennungsgröße erzeugte Wärmebild einem Verfahren zur Erkennung von großen Temperaturdifferenzen zwischen einzelnen Bildpunkten zur Sensierung der Abgastemperatur eines bekannten Objektes unterworfen wird, wobei die gemessenen Temperaturdifferenzen mit vorgegebenen und bestimmten Objekten zugeordneten Temperaturdifferenzen verglichen und eine entsprechende Anzeige abgegeben wird.

7. Einrichtung zur Durchführung des Verfahrens nach einem der Ansprüche 1 bis 6 an einem Kampffahrzeug, das mit einem optronischen Sensor sowie Rundsuchradar und Zielfolgeradar ausgerüstet ist, gekennzeichnet durch folgende zusätzliche Einrichtungsteile:

a) Eine elektronische Vorauswerteschaltung (14), die einen Prozessor sowie Speichervorrichtungen zur Einspeicherung und von Entfernung, Annäherungsgeschwindigkeit und Annäherungszeit vom Radar erfaßter Objekte enthält;

b) eine elektronische Auswerteschaltung (8), die einen Prozessor sowie Speichervorrichtungen zur Eingabe vorgegebener Werte für Entfernung, Höhe, Geschwindigkeit, Radarrückstrahlintensität, optische Erkennungsgrößen und/oder thermische Erkennungsgrößen von vorgegebenen Objekten enthält;

c) elektronische Steuerschaltungen (9, 10) zur Ansteuerung der Positionierung und Auslösung von Selbstschutzgeräten;

d) Anzeigevorrichtungen (11, 12, 13) zur Anzeige von Ausgangssignalen der Auswerteschaltung (8).

9

FIG. 1

EP 0 310 869 A2

| Erfassungslogik:<br>( jeweils 4 Meßgrößen) | 8.1 | Erkennungslogik I :<br>( bei 2 benachb. Objekten) | 8.2 | Sortierlogik I :<br>(Meßgrößen vergl. m.<br>mittl. Schwellwerten) | 8.3 |
|---|---|---|---|---|---|

| Erkennungslogik II :<br>( Oef. v. 4 Kategorien<br>Einordnung d. Objekts) | 8.4 | Sortierlogik II :<br>(Zuordnung der<br>Alternativen v. Maß-<br>nahmen ) | 8.5 | Entscheidungslogik:<br>(Selbstschutz - Bekämpfen<br>-anderes Ziel suchen ) | 8.6 |
|---|---|---|---|---|---|

FIG. 2

EP 0 310 869 A2

**Kategorie 1**

Pz  NS  FS  LFK  KH

**Kategorie 2**

ARM  KF

DW  NS  Pz

**Kategorie 3**

ARM  KF

DW  NS  Pz  FS  LFK

Höhe

**Kategorie 4**

Pz  NS  FS  RPV  KH

Entfernung

# FIG. 3

**14.1**

| | | |
|---|---|---|
| **1** Such-Radar | → Signalaufbereitung, Berechn. Entfernung Annäherungsgeschw. **14.1** | |

Speichern der Meßgrößen u. regelm. Erneuern **14.2**

Markieren der beiden ausgewählten Objekte **14.4**

Sortieren der Objekte (Prioritätslogik) **14.3**

**2** PPI-Monitor

FIG. 4

EP 0 310 869 A2

FIG. 5